# EUROPEAN PATENT SPECIFICATION

(11) **EP 3 647 151 B1**
(45) Date of publication and mention of the grant of the patent: **05.07.2023**
(21) Application number: 19206680.1
(22) Date of filing: 31.10.2019
(51) Int. Cl.: B61F 5/32, B61F 5/38, F16F 3/10

(54) **WHEEL AXLE GUIDING ASSEMBLY WITH LOAD DEPENDENT PRESSURISING MEANS**
RADACHSENFÜHRUNGSANORDNUNG MIT LASTABHÄNGIGEN DRUCKMITTELN
ENSEMBLE GUIDE D'ESSIEU DE ROUE AVEC DES MOYENS DE PRESSURISATION DÉPENDANT DE LA CHARGE

(30) Priority: 05.11.2018 GB 201818011
(43) Date of publication of application: 06.05.2020
(73) Proprietor: Bombardier Transportation GmbH, 10785 Berlin (DE)
(72) Inventor: STOESSEL, Lucien, 8706 Meilen (CH)
(74) Representative: Alatis

(56) References cited:
- EP-A1- 1 457 707
- WO-A1-2017/140523
- ES-T3- 2 228 090
- JP-A- 2007 045 275
- JP-B1- 6 309 596

## Description

### TECHNICAL FIELD OF THE INVENTION

The invention relates to a wheel axle guiding assembly for a rail vehicle, provided with a hydro-mechanical guiding assembly to allow a fore-and-aft movement of an axle box parallel to the longitudinal direction, i.e. a passive steering or an active steering of the wheel axle.

### BACKGROUND ART

EP1457707 discloses a running gear of a rail vehicle, provided with an axle box integral with a swing arm, a primary suspension between the swing arm and a running gear frame, and a bushing allowing the swing arm to pivot about a horizontal axis relative to the running gear frame. The bushing is provided with a rubber sleeve mounted between concentric inner and outer sleeves. The rubber sleeve defines diametrically opposite chambers filled with hydraulic fluid and connected by a channel which acts as a vibration damper. The chambers enable a fore-and-aft movement of the inner sleeve relative to the outer sleeve and hence of the swing arm and axle box relative to the running gear frame. At low temperature, however, the fluid in the hydraulic chambers reduces its volume due to thermal retraction. During deflections in the functional direction of the hydraulic bushing, this leads to cavitation in the fluid chamber on the low-pressure side of the bushing. This impacts the load-deflection curve of the element in the functional direction, reducing the dynamic stiffness around the neutral position. Moreover, any leakage in the system results in a significant reduction of the stiffness in the longitudinal direction.

A hydro-mechanical guiding assembly for a wheel axle guiding assembly of a primary suspension of a rail vehicle is disclosed in JP2951368. The hydro-mechanical guiding assembly comprises: a first variable volume hydraulic chamber and a second variable volume hydraulic chamber connected to one another and located between a support assembly fixed relative to bogie frame and an axle box assembly, such that a movement of the axle box assembly relative to the support assembly in a longitudinal direction results in a reduction of an internal volume of the one of the first and second variable volume hydraulic chambers and a corresponding increase of an internal volume of the other of the first and second variable volume hydraulic chambers. No compensation of the thermal contraction of the hydraulic liquid is provided. Moreover, any leakage in the system results in a significant reduction of the stiffness in the longitudinal direction. Further related prior art is known from WO 2017/140523 A1.

### SUMMARY OF THE INVENTION

The invention aims to provide a wheel axle guiding means that is less significantly impacted by temperature changes and/or by leakage.

According to a first aspect of the invention, there is provided a wheel axle guiding assembly for a running gear of a rail vehicle, comprising:
- an axle box assembly defining a revolution axis, which is horizontal when the wheel axle guiding assembly is in a standard operational position, and a steering direction, which is perpendicular to the revolution axis and horizontal when the wheel axle guiding assembly is in the standard operational position;
- a support assembly; and
- a hydro-mechanical guiding assembly fixed to the axle box assembly and to the support assembly to allow a fore-and-aft movement of the axle box assembly relative to the support assembly parallel to the steering direction, wherein the hydro-mechanical guiding assembly comprises: a first variable volume hydraulic chamber and a second variable volume hydraulic chamber between the support assembly and the axle box assembly such that a movement of the axle box assembly relative to the support assembly in the steering direction results in a reduction of an internal volume of the one of the first and second variable volume hydraulic chambers and a corresponding increase of an internal volume of the other of the first and second variable volume hydraulic chambers, wherein the hydro-mechanical guiding assembly further comprises load-dependent pressurising means such that an increase in a vertical load applied by the support assembly on the axle box assembly in the standard operational position of the wheel axle guiding assembly results in a pressure increase in the first variable volume hydraulic chamber and second variable volume hydraulic chamber.

The hydro-mechanical guiding assembly comprises a set of one or more elastomeric bodies, which form deformable walls of the first variable volume hydraulic chamber and second variable volume hydraulic chamber and constitute the load-dependent pressurising means. The load-dependent pressurising means constitute a unitary unit with the hydro-mechanical guiding assembly. In particular, the hydro-mechanical guiding assembly may comprise a casing having a bottom and a set of one or more side walls defining an open cavity, and a top wall surrounding a top opening of the open cavity; and a plunger, the plunger having an internal portion received in the cavity and an external portion protruding out from the open cavity. In this embodiment, the set of one or more elastomeric bodies comprises a partition membrane between the side wall of the casing and the internal portion of the plunger for partitioning the cavity into the first and second variable volume hydraulic chambers.

Preferably, the set of one or more elastomeric bodies defines: a bottom pad between the internal portion of the plunger and the bottom of the casing, a bottom end of each of the first and second variable volume hydraulic chambers being closed by the bottom pad; and an annular top membrane between the casing the top wall of the casing and the plunger, a top end of each of the first and second variable volume hydraulic chambers being closed by the top membrane.

Preferably, the set of one or more elastomeric bodies is such that:
- the plunger is movable with respect to the casing in a suspension direction of the casing, such that an axial distance measured parallel to the suspension direction between the plunger and the top wall of the casing is reduced when an axial distance measured parallel to the suspension direction between the plunger and the bottom of the casing is reduced, wherein the suspension direction is vertical when the wheel axle guiding assembly is in the standard operational position; and
- the plunger is movable with respect to the casing in the steering direction.

The bottom wall of the internal portion of the plunger can have various shapes. It can be planar, but is preferably convex, in particular cylindrical or spherical.

The bottom of the cavity of the casing can have various shapes. It can be planar, but is preferably concave, in particular cylindrical or spherical.

Advantageously, may further comprise at least one of the following:
- a pivot element and a pivot connexion between the pivot element and the protruding portion of the plunger about a pivot axis parallel to the suspension direction.
- a pivot support and a pivot connexion between the pivot support and the casing about a pivot axis, wherein the pivot axis is parallel to the suspension direction in a reference position of the plunger.

The pivot connexion provides the wheel axle guiding assembly with a degree of freedom of rotation relative to the axle box assembly and/or relative to the support assembly.

In a preferred and non-limiting embodiment or example, the partition wall extends in a reference plane perpendicular to the steering direction.

In a preferred and non-limiting embodiment or example, a total steering stroke of the plunger with respect to the casing parallel to the steering direction is greater than a total suspension stroke of the plunger with respect to the casing parallel to the suspension direction. The suspension stroke has no other function than allowing for the load-dependent pressurisation of the first and second variable volume hydraulic chambers, whereas the stroke in the steering direction allows for steering or self-steering of the axle box assembly. In a preferred and non-limiting embodiment or example, the set of one or more elastomeric bodies provides, in the absence of a hydraulic fluid in the first and second variable volume hydraulic chambers, a steering stiffness in a direction parallel to the steering direction and a suspension stiffness in a direction parallel to the suspension direction, and the steering stiffness is less than the suspension stiffness, preferably at least ten times less than the suspension stiffness.

In a preferred and non-limiting embodiment or example, the axle box assembly comprises a swing arm, and the hydro-mechanical guiding assembly comprises a bushing element between the swing arm and the support assembly, wherein the bushing element comprises the first and second variable volume hydraulic chambers.

In a preferred and non-limiting embodiment or example, the hydro-mechanical guiding assembly comprises a first longitudinal hydro-mechanical converter fixed to a first interface of the axle box assembly and a first interface of the support assembly and a second longitudinal hydro-mechanical converter fixed to a second interface of the axle box assembly and a second interface of the support assembly. The wheel axle guiding assembly can include one or more of the following features:
- Each of the first and second longitudinal hydro-mechanical converters includes a housing, a plunger and an elastomeric body fixed to the housing and to the plunger so as to allow a fore-and-aft relative movement parallel to the steering direction between the plunger and the housing, wherein the first variable volume hydraulic chamber is formed between the housing, the plunger and the elastomeric body of the first longitudinal hydro-mechanical converter and the second variable volume hydraulic chamber is formed between the housing, the plunger and the elastomeric body of the second longitudinal hydro-mechanical converter.
- The first interface of the axle box faces the first interface of the axle box carrier and the second interface of the axle box faces the second interface of the axle box carrier.
- The first interface and the second interface of the axle box carrier are located between the first interface and the second interface of the axle box.
- The horizontal revolution axis is located longitudinally between the first interface and a second interface of the axle box carrier.

According to another aspect of the invention, there is provided a wheel axle guiding assembly for a running gear of a rail vehicle, comprising:
- an axle box assembly defining a revolution axis, which is horizontal when the wheel axle guiding assembly is in a standard operational position, and a steering direction, which is perpendicular to the revolution axis and horizontal when the wheel axle guiding assembly is in the standard operational position;
- a support assembly; and
- a hydro-mechanical guiding assembly fixed to the axle box assembly and to the support assembly to allow a fore-and-aft movement of the axle box assembly relative to the support assembly parallel to the steering direction, wherein the hydro-mechanical guiding assembly comprises: a first variable volume hydraulic chamber and a second variable volume hydraulic chamber between the support assembly and the axle box assembly such that a movement of the axle box assembly relative to the support assembly in the steering direction results in a reduction of an internal volume of the one of the first and second variable volume hydraulic chambers and a corresponding increase of an internal volume of the other of the first and second variable volume hydraulic chambers, wherein the hydro-mechanical guiding assembly further comprises load-dependent pressurising means comprising a variable volume pressurising chamber hydraulically connected to the first variable volume hydraulic chamber and to the second variable volume hydraulic chamber such that an increase in a vertical load applied by the support assembly on the axle box assembly in the standard operational position of the wheel axle guiding assembly results in a pressure increase in the first variable volume hydraulic chamber and second variable volume hydraulic chamber.

The wheel axle guiding assembly can include one or more of the following features:
- The variable volume pressurising chamber has a wall fixed relative to the axle box assembly and a wall fixed relative to the support assembly.
- A primary spring is provided for connecting the axle box assembly to the support assembly, wherein the variable volume pressurising chamber is mechanically in series with the primary spring between the axle box assembly and the support assembly.
- A primary spring is provided for connecting the axle box assembly to the support assembly, wherein the variable volume pressurising chamber is mechanically in parallel with the primary spring between the axle box assembly and the support assembly.
- The support assembly comprises a remote variable volume pressurising chamber.
- The support assembly is part of a running gear, which comprises a running gear frame and a secondary suspension for connecting the running gear frame to a vehicle body of the rail vehicle, and the variable volume pressurising chamber is mechanically in series with the secondary spring.
- The support assembly comprises a running gear frame, the wheel axle guiding assembly comprises a secondary suspension for connecting the running gear frame to a vehicle body of the rail vehicle, and the variable volume pressurising chamber is mechanically in parallel with the secondary spring.
- A failsafe locking device is provided for locking the axle box assembly relative to the support assembly in case of loss of pressure consecutive to a hydraulic leakage.

The vertical load applied by the support assembly, i.e. the vehicle body of the rail vehicle and/or the frame of the running gear, on the wheel axle guiding assembly in standard operational conditions, which in practice is more than 1000 daN, ensures that a minimum pressure is always present in the variable volume hydraulic chambers to avoid cavitation.

Preferably, the load-dependent pressurising means are such that an increase in the vertical load applied by the support assembly on the axle box assembly from no load to a standard operational load results in a pressure increase of more than 3 bars, preferably more than 5 bars in the first variable volume hydraulic chamber and second variable volume hydraulic chamber. This ensures that a significant pressure is always present in the hydraulic chambers.

According to a preferred embodiment, a communication passage with a constriction is provided between the first and second variable volume hydraulic chambers. The constriction constitutes a low pass filter which provides a desired frequency response of the hydro-mechanical guiding assembly: horizontal fore and aft movement of the axle box relative to the support assembly will be unimpaired at low frequencies, e.g. below 1 Hz, while the system will become stiffer at higher frequencies. According to a preferred embodiment, the first variable hydraulic chamber, the second variable volume hydraulic chamber, the constriction and the load-dependent pressurising means constitute a closed circuit.

According to a preferred embodiment, the first and second variable volume hydraulic chambers are connected to a passive steering circuit. The passive steering circuit can link the first and second chambers of the hydro-mechanical guiding assembly or have a more complex layout, e.g. a cross-connexion between the two hydraulic chambers of the hydro-mechanical guiding assembly and two further hydraulic chambers of a further hydro-mechanical guiding assembly for a further axle box assembly, which can be located on an opposite side or on the same side of the running gear.

According to another aspect of the invention, there is provided a resilient bushing for a primary suspension of a rail vehicle, the resilient bushing comprising:
- a casing forming a cavity having a bottom, a side wall and a top opening, the casing defining a reference axis extending through the bottom and the top opening and a reference plane that contains the reference axis;
- a plunger, the plunger having an internal portion received in the cavity, a protruding portion axially protruding through the top opening out of the cavity, and
- one or more elastomeric members, which form:
   - a bottom pad between a bottom wall of the internal portion of the plunger and the bottom of the casing,
   - an annular top membrane between the top opening of the casing and the protruding portion of the plunger, and
   - a partition membrane between the side wall of the cavity and the internal portion of the plunger for partitioning the cavity into two pressure chambers, a top end of each of the two chambers being closed by the top membrane and a bottom end of each of the two chambers being closed by the bottom pad.

The partition membrane, top membrane and bottom pad are such that:
- the plunger is movable with respect to the casing in a suspension direction parallel to the reference axis, such that an axial distance between the protruding portion of the plunger and the top opening is reduced when an axial distance between the internal portion of the plunger and the bottom of the casing is reduced; and
- the plunger is movable with respect to the casing in a steering direction perpendicular to the reference plane of the casing.

In a preferred and non-limiting embodiment or example, an end portion of the internal portion of the plunger, which faces the bottom of the cavity, is convex, preferably cylindrical or spherical.

In a preferred and non-limiting embodiment or example, the bottom of the cavity of the casing is concave, preferably cylindrical or spherical.

The resilient bushing may further comprise a pivot element and a pivot connexion between the pivot element and the protruding portion of the plunger about the reference axis.

The resilient bushing may further comprise a pivot support and a pivot connexion between the pivot support and the casing about a pivot axis, wherein the pivot axis is parallel to the reference axis in a reference position of the plunger.

The resilient bushing may further comprise a fluid passage with a constriction between the two pressure chambers of the cavity.

The resilient bushing may further comprise two fluid ports for delivering fluid to either one of the two pressure chambers.

In a preferred and non-limiting embodiment or example, the partition wall extends in a reference plane perpendicular to the steering direction.

Advantageously, a total steering stroke of the plunger with respect to the casing parallel to the steering direction is greater than a total suspension stroke of the plunger with respect to the casing parallel to the reference axis.

In a preferred and non-limiting embodiment or example, the partition membrane, top membrane and bottom pad provide, in the absence of pressure in the two pressure chambers, a steering stiffness in a direction parallel to the steering direction and a suspension stiffness parallel to the reference axis, and the steering stiffness is less than the suspension stiffness, preferably at least ten times less than the suspension stiffness.

A failsafe locking device can be provided for locking the plunger relative to the casing in the steering direction in case of loss of pressure consecutive to a hydraulic leakage.

According to another aspect of the invention, there is provided a primary suspension between an axle box assembly of a rail vehicle and a frame, the axle box assembly defining a revolution axis and a vertical axis perpendicular to the revolution axis, the primary suspension comprising: a primary spring that extends between an application point of the axle box assembly and the frame, an axle guide element that allows a pivoting movement of the axle box assembly about a pivot axis, wherein the pivot axis is parallel to the revolution axis and located at a distance from the revolution axis and from the application point, wherein the axle guide element comprises a resilient bushing as described hereinbefore.

The application point and the pivot axis are preferably on opposite sides of a vertical plane containing the revolution axis.

### BRIEF DESCRIPTION OF THE FIGURES

Other advantages and features of the invention will then become more clearly apparent from the following description of specific embodiments of the invention given as non-restrictive examples only and represented in the accompanying drawings in which:
- figure 1 is a schematic view of a running gear of a rail vehicle, provided with a wheel axle guiding assembly according to an embodiment of the invention;
- figure 2 is a schematic cross-section of the wheel axle guiding assembly of figure 1 according to a first, a second, a third and a fourth embodiment of the invention, through a longitudinal vertical median plane II-II of the wheel axle guiding assembly parallel to a longitudinal travelling direction of the running gear;
- figure 3 is a schematic cross-section of the wheel axle guiding assembly of figure 1 according to the first embodiment and to a second embodiment of the invention and to a third embodiment of the invention, through a transversal vertical median plane III-III of the wheel axle guiding assembly perpendicular to the longitudinal travelling direction of the running gear;

- figure 4 is a schematic cross-section of the first embodiment of the wheel axle guiding assembly of figure 1 through a horizontal plane IV-IV illustrated in figures 2 and 3;
- figure 5 is a schematic cross-section of the first embodiment the wheel axle guiding assembly of figure 1 through a horizontal plane V-V illustrated in figures 2 and 3;
- figure 6 is a schematic cross-section of the second embodiment of the wheel axle guiding assembly of figure 1 through a horizontal plane IV-IV illustrated in figures 2 and 3;
- figure 7 is a schematic cross-section of the second embodiment the wheel axle guiding assembly of figure 1 through a horizontal plane V-V illustrated in figures 2 and 3;
- figure 8 is a schematic cross-section of the second embodiment the wheel axle guiding assembly of figure 1 through the longitudinal vertical median plane III-III of figure 2;
- figure 9 is a schematic cross-section of the wheel axle guiding assembly of figure 1 according to the third embodiment of the invention, through the transversal vertical median plane III-III of figure 2;
- figure 10 is a schematic cross-section of the wheel axle guiding assembly of figure 1 according to a fourth embodiment of the invention, through a longitudinal vertical median plane of the wheel axle guiding assembly parallel to a longitudinal travelling direction of the running gear;
- figure 11 is a schematic cross-section of the wheel axle guiding assembly of figure 1 according to a fifth embodiment of the invention, through a longitudinal vertical median plane of the wheel axle guiding assembly parallel to a longitudinal travelling direction of the running gear;
- Figure 12 is a schematic view of the wheel axle guiding assembly of figure 1 according to a sixth embodiment of the invention;
- Figure 13 is a schematic view of a wheel axle guiding assembly according to a seventh embodiment of the invention.

### DETAILED DESCRIPTION OF PREFERRED EMBODIMENTS

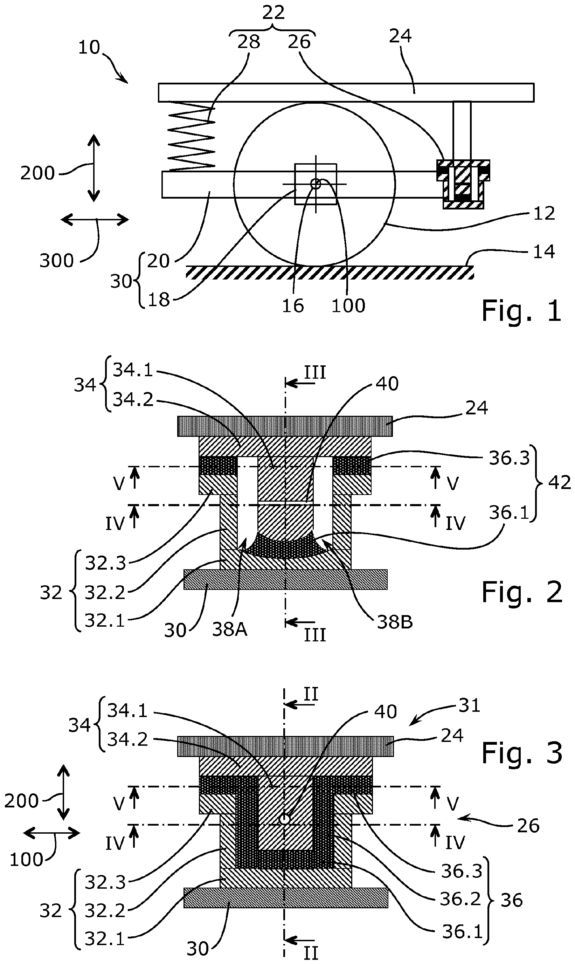

With reference to figure **1****,** a running gear **10** of a rail vehicle comprises a wheel **12** which runs on a rail **14** of a rail track, a wheel axle **16** fixed to the wheel **12,** an axle box **18** for guiding the wheel axle **16** about a revolution axis **100,** a swing arm **20** integral with the axle box **18** and a suspension **22** arranged between the swing arm **20** and a support assembly **24,** which can be a running gear frame or an underframe of the vehicle body. The wheel **12** can be part of a wheelset, i.e. of a set of left and right wheels attached to a common wheel axle, or it can be an independent wheel.

The suspension **22** comprises a bushing **26** and a helicoidal spring **28.** The bushing **26** allows the axle box assembly **30** consisting of the axle box **18** and the swing arm **20** to pivot relative to the support assembly **24** about a horizontal transverse pivot axis parallel to the revolution axis **100,** while the helicoidal spring **28** enables a deflection of a free end of the swing arm **20** with a predetermined stiffness in a suspension direction **200** parallel or substantially parallel to a vertical direction.

The bushing **26** is formed as a hydro-mechanical guiding assembly fixed to the axle box assembly **30** and to the support assembly **24** to allow a limited fore-and-aft movement of the axle box assembly **30** relative to the support assembly **24** parallel to a steering direction **300.** The steering direction **300** is a direction which, when the running gear **10** is in an operational stationary reference position on a straight horizontal railway track, is horizontal, parallel or substantially parallel to the track and perpendicular to the revolution axis **100** of the wheel **12.**

The axle box assembly **30,** the support assembly **24** and the hydro-mechanical guiding assembly **26** form together a wheel axle guiding assembly **31** according to a first embodiment of the invention.

The hydro-mechanical guiding assembly **26** as illustrated in detail in figures **2** to **5** comprises a casing **32** which forms an open cavity, a plunger **34,** which has an internal portion **34.1** received in the cavity and an external portion **34.2** protruding out of the cavity, and a set of one or more elastomeric bodies **36,** which form deformable walls between the plunger **34** and the casing **32** to define a first variable volume hydraulic chamber **38A** and second variable volume hydraulic chamber **38B,** which communicate with one another through a communication channel **40** with a limited cross-section to provide a predetermined pressure drop. The communication channel **40** is preferably formed through the plunger **34.**

More specifically, the casing **32** has a bottom **32.1,** a set of one or more side walls **32.2,** and a top wall **32.3** with a top opening edge surrounding the open cavity, through which the plunger protrudes. The set of one or more elastomeric bodies **36** includes a bottom pad **36.1** between a bottom wall of the internal portion **34.1** of the plunger and the bottom **32.1** of the casing **32.** The bottom wall of the internal portion **34.1** of the plunger **34** is preferably convex, in particular cylindrical, while the bottom **32.1** of the cavity of the casing **32** has a complementary or substantially complementary concave shape, in particular a cylindrical shape. The set of one or more elastomeric bodies **36** comprises two partition membranes **36.2** between the side wall **32.2** of the cavity and a side wall of the internal portion **34.1** of the plunger **34** for partitioning the cavity into the first and second variable volume hydraulic chambers **38A, 38B.** The set of one or more elastomeric bodies **36** further includes an annular top membrane **36.3** between the top opening edge **32.4** of the casing **32** and an intermediate wall of the plunger **34.** A bottom end of each of the first and second variable volume hydraulic chambers **38A, 38B** is closed by the bottom pad **36.1,** while a top end of each of the first and second variable volume hydraulic chambers **38A, 38B** is closed by the top membrane **36.3.**

One of the casing **32** and plunger **34** is connected to the axle box assembly 30 while the other is connected to the support assembly **24.** The plunger **34** is oriented in a suspension direction **200,** which is vertical when the wheel axle guiding assembly **30** is in the standard operational position. The plunger **34** is located between the first and second variable hydraulic chambers **38A, 38B** along the steering direction **300.** The convex portion of the bottom wall of the plunger **34** and the cylindrical concave portion of the bottom wall **32.1** of the casing **32** allow limited relative pivotal movements between the plunger **34** and the casing **32** about a pivot axis parallel to the revolution axis **100** of the wheel **12,** with corresponding deformations of the elastomeric bodies.

Any translation movement of the axle box assembly **30** relative to the support assembly **24** in the steering direction **300** results in a reduction of an internal volume of one of the first and second variable volume hydraulic chambers **38A, 38B** and a corresponding increase of an internal volume of the other of the first and second variable volume hydraulic chambers **38A, 38B.** The cross-section of the communication channel **40** between the first and second variable volume hydraulic chambers **38A, 38B** is a parameter for defining a frequency response of the system, i.e. the cutoff frequency below which the movement of the fluid between the two chambers **38A, 38B** is substantially unimpaired and beyond which the movement of the fluid between the two chambers **38A, 38B** is progressively cut off.

The plunger **34** is also movable with respect to the casing **32** in the suspension direction **200,** such that an axial distance measured parallel to the suspension direction **200** between the external portion **34.2** of the plunger **34** and the top wall **32.3** is reduced when an axial distance measured parallel to the suspension direction **100** between the bottom wall of the internal portion **34.1** of the plunger **34** and the bottom **32.1** of the casing is reduced. In other words, the bottom pad **36.1** and top membrane **36.3** are simultaneously compressed or extended in the suspension direction **200.** The bottom pad **36.1** and top membrane **36.3** form together load-dependent pressurising means **42** which are such that an increase in a vertical load applied by the support assembly **24** on the axle box assembly **30** in the standard operational position of the wheel axle guiding assembly **26** results in an increase of the pressure into the first variable volume hydraulic chamber **38A** and second variable volume hydraulic chamber **38B.** More specifically, an increase in the vertical load applied by the support assembly **24** on the axle box assembly **30** from no load to a standard operational load results in an increase of a pressure into the first variable volume hydraulic chamber **38A** and second variable volume hydraulic chamber **38B** of more than 3 bars, preferably more than 5 bars.

Hence, the static vertical load from the vehicle body transmitted through the support assembly **24** generates a nearly constant pressure in the load-dependent hydraulic circuit. At low temperature, the volume of the fluid in the hydraulic chambers **38A, 38B** is reduced due to thermal retraction. Thanks to the static load applied by the vehicle body, however, the plunger **34** moves further into the cavity of the casing **32,** which results in a deformation of the elastomeric bodies **36,** in particular of the annular top membrane **36.3** and lower pad **36.1** and a reduction of the volume of the first and second chambers **38A, 38B.** This deformation is counteracted by the fluid in the hydraulic chambers, which ensure that a proper fluid pressure is maintained in the hydraulic circuit. A similar effect is achieved in case of a leakage.

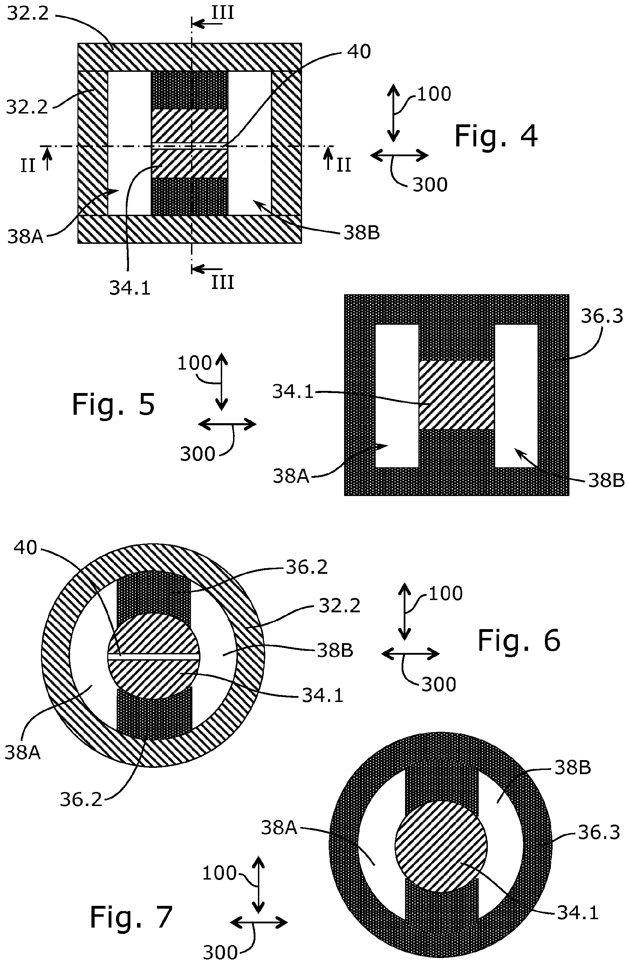

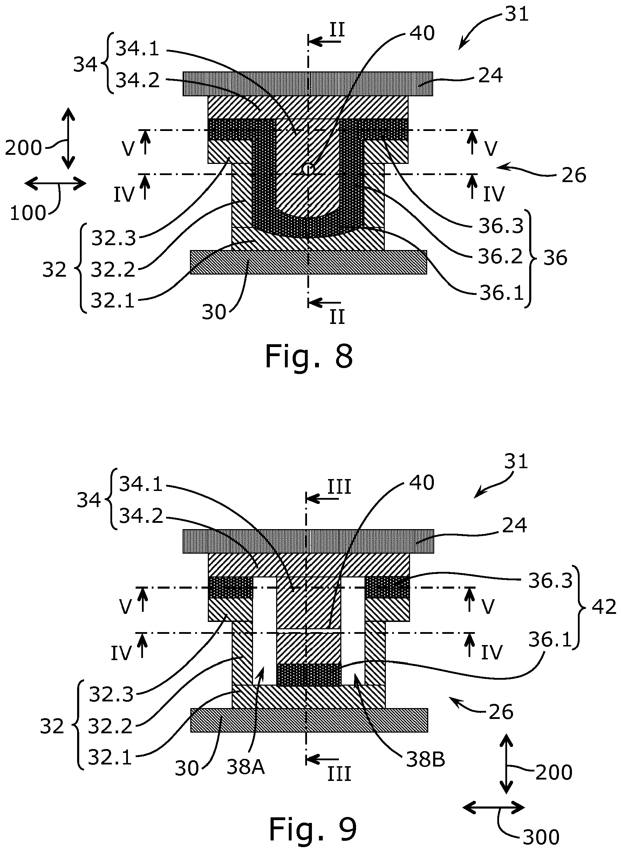

A second embodiment of the wheel axle guiding assembly **26** is illustrated in figures **6** and **8****.** This embodiment differs from the embodiment of figures **1** to **5** in that the side wall **32.2** of the casing has a cylindrical shape, the bottom wall **32.1** of the casing **32** has a convex hemispherical shape and the bottom end of the plunger **34** has a complementary or substantially complementary concave hemispherical shape.

A third embodiment of the wheel axle guiding assembly **26** is illustrated in figure 9. This embodiment differs from the embodiment of figures **1** to **5** in that the bottom wall **32.1** of the casing **32** is planar as well has the bottom end of the plunger **34.**

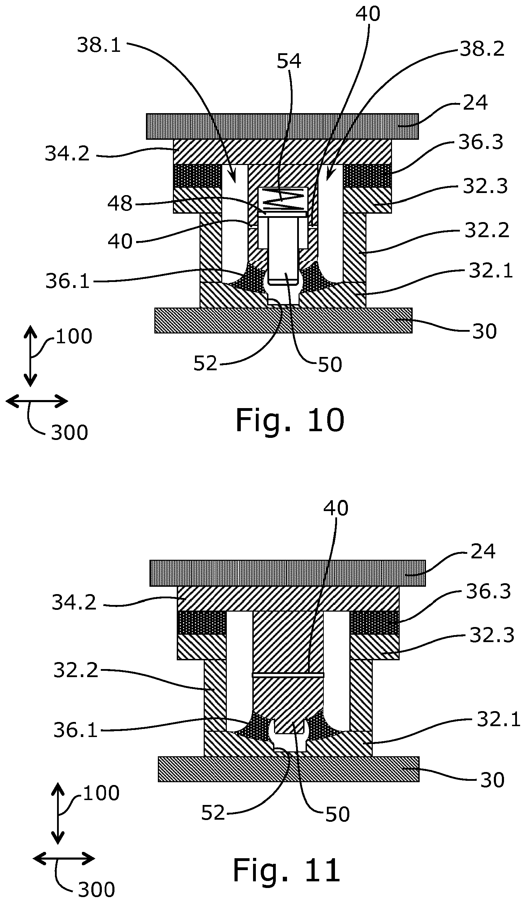

A fourth embodiment of the wheel axle guiding assembly is illustrated in figure **10****.** This embodiment differs from the embodiment of figures **1** to **5** in that it includes a failsafe locking device **44** for locking the wheel axle guiding assembly in case of loss of pressure consecutive to a leakage. The locking device **44** includes a pressure chamber **46,** a piston **48** moving into the pressure chamber **44,** a pin **50** integral with the piston **48** and protruding out of the pressure chamber **46,** a locking hole **52** formed in the bottom wall **32.1** of the casing **32** and a biasing element **54,** here a spring, for biasing the piston **48** towards the locking hole **52.** The pressure chamber **46** is connected to the first and second variable volume hydraulic chambers **38A, 38B** through the communication channel **40** and is subjected to the same static pressure as the first and second variable volume hydraulic chambers **38A, 38B.** In standard operational conditions, the static pressure in the pressure chamber **46** overcomes the biasing force of the biasing element **54** and maintains the pin out of the locking hole. The locking device **44** is unlocked and the wheel guiding assembly **26** operates as described hereinbefore. Whenever the static pressure drops below a predetermined threshold defined by the biasing element **54,** the latter pushes the piston **48** and the pin **50** to a locking position into the locking hole **52.** Further movement in the steering direction **300** is prevented and the running gear **10** remains operational albeit without its steering function. Depending on the shape of the pin **50** and locking **52** the pivot movement of the wheel axle guiding assembly **26** may or may not be impaired.

A fifth embodiment of the wheel axle guiding assembly is illustrated in figure **11****.** This embodiment differs from the embodiment of figures **10** in that the failsafe locking device **44** is simplified. More specifically, the locking device **44** comprises a pin **50,** which is integral with the plunger **34** and faces a locking hole **52** formed in the bottom wall **32.1** of the casing **32.** As long as the hydraulic pressure in the first and second variable volume hydraulic chambers **38A, 38B** is above a predetermined threshold, the pin **50** remains outside the locking hole **52.** Whenever the hydraulic pressure in the first and second variable volume hydraulic chambers **38A, 38B** drops below said threshold, the deformation of the bottom pad is such that the pin **50** enters the locking hole **52.**

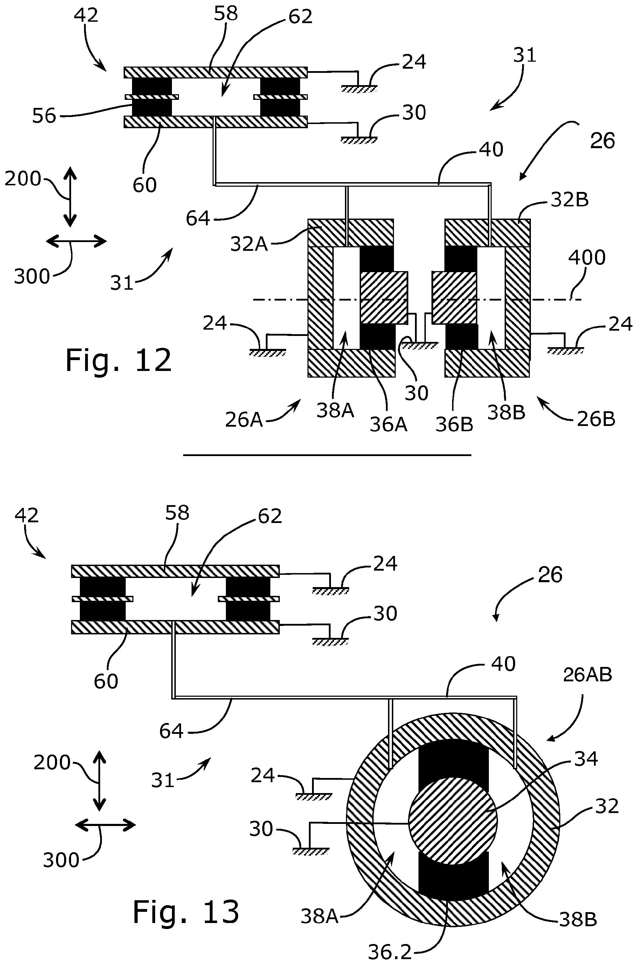

A wheel axle guiding assembly **31** according to a sixth embodiment of the invention is illustrated in figure **12****.** The wheel axle guiding assembly **31** comprises a hydro-mechanical guiding assembly **26** arranged between an axle box assembly **30** and a support assembly **24,** which can be a running gear frame or a subframe of a rail vehicle. The hydro-mechanical guiding assembly **26** comprises two separate longitudinal hydro-mechanical converters **26A, 26B** and a load-dependent pressurising subunit **42.** Each of the two separate longitudinal hydro-mechanical converters **26A, 26B** comprises a cavity **38A, 38B** in which a plunger **34A, 34B** can move in a fore-and-aft direction parallel to the steering direction **300** as defined hereinbefore. Each plunger **34A, 34B** is linked to the walls **32A, 32B** of the associated cavity by means of an annular elastomeric body **36A, 36B.** The annular elastomeric body **36A, 36B** has a geometric axis **400** that is parallel to the steering direction **300** and allows the aforementioned movement of the plunger **34A, 34B** in the steering direction **300** as well as a limited movement in a suspension direction **200** parallel to a vertical direction. In figure **12****,** the two plungers **34A, 34B** are integral with the axle box assembly **26** while the walls **32A, 32B** of the two cavities **38A, 38B** are integral with the support assembly **24.** However, other configurations are possible, as discussed for instance in WO2017/140523: each plunger **34A, 34B** can be attached to the support assembly **24,** whereas the walls **32A, 32B** of the associated cavity **38A, 38B** are integral with the axle box assembly **30;** or one of the plungers **34A, 34B** can be attached to the support assembly **24** and the other one to the axle box assembly **30.** In each configuration, a movement of the axle box assembly **30** relative to the support assembly **24** in the steering direction **300** results in a reduction of an internal volume of the one of the first and second variable volume hydraulic chambers **38A, 38B** and a corresponding increase of an internal volume of the other of the first and second variable volume hydraulic chambers **38A, 38B.** The wheel axle guiding assemblies of figures **12** and **13** are compatible with all configurations illustrated in figures 1 to 12 of WO2017/140523.

The load-dependent pressurising subunit **42** consists of an annular elastomeric body **56** with a vertical axis, between two horizontal plates **58, 60,** one of which is fixed relative to the support assembly **24** while the other one is fixed relative to the axle box assembly **30,** such as to form a variable volume pressurising chamber **62.** The two longitudinal hydro-mechanical converters **26A, 26B** are hydraulically connected with one another through a communication pipe **40** and with the load-dependent pressurising subunit **42** through connecting pipes **64.** The permanent load applied by the support assembly **24** to the load-dependent pressurising subunit **42** ensures a constant static pressure in the hydraulic circuit. Forces applied at low frequency to the axle box assembly **30** in the steering direction **300** result in fluid movement in the communication pipe **40** between the variable volume hydraulic chambers **38A, 38B** of the two longitudinal hydro-mechanical converters **26A, 26B.**

A seventh embodiment of the wheel axle guiding assembly is illustrated in figure **13****.** This embodiment differs from the embodiment of figure **12** in that the hydro-mechanical guiding assembly **26** comprises a cylindrical steering unit **26AB,** extending along a horizontal axis parallel to the revolution axis **100** and a separate pressurising subunit **42.** The cylindrical steering unit **26AB** comprises a cylindrical casing **32,** a cylindrical pivot **34** received within the cylindrical casing **32,** and a set of elastomeric bodies **36** between the pivot **34** and the casing **32** for defining two variable volume hydraulic chambers **38A, 38B,** one on each side of the pivot **34** in the steering direction **300.** The two chambers **38A, 38B** are hydraulically connected with one another and with a hydraulic chamber **62** of the load-dependent pressurising subunit **42.** One of the pivot **34** and casing **32** is fixed to the support assembly **24** while the other one is fixed to the axle box assembly **30.** This embodiment operates substantially in the same way as the sixth embodiment.

As will be readily understood, the embodiments of figures **1** to **11** differ from the embodiments of figures **12** and **13** in that the load-dependent pressurising means **36.1, 36.3** of the variable volume hydraulic chambers are combined in one and the same structure, thanks to a specific layout of the elastomeric bodies **36.1, 36.3.**

The wheel axle guiding assembly of the invention can be used as part of any one of the passive steering circuits illustrated in figures 13 to 18 of WO2017/140523.

The invention is not limited to the above-described embodiments. Features, which have been described or illustrated in connexion with one embodiment can be combined with other features of other embodiments to form additional variants, as long as they fall within the scope of the appended claims. For instance, the locking function depicted in figures **10** or **11** can be applied to all embodiments.

## Claims

1. A wheel axle guiding assembly (31) for a running gear (10) of a rail vehicle, comprising:
- an axle box assembly (30) defining a revolution axis (100), which is horizontal when the wheel axle guiding assembly (31) is in a standard operational position, and a steering direction (300), which is perpendicular to the revolution axis (100) and horizontal when the wheel axle guiding assembly (31) is in the standard operational position;
- a support assembly (24); and
- a hydro-mechanical guiding assembly (26) fixed to the axle box assembly (30) and to the support assembly (24) to allow a fore-and-aft movement of the axle box assembly (30) relative to the support assembly (24) parallel to the steering direction (300), wherein the hydro-mechanical guiding assembly (26) comprises: a first variable volume hydraulic chamber (38A) and a second variable volume hydraulic chamber (38B) between the support assembly (24) and the axle box assembly (30) such that a movement of the axle box assembly (30) relative to the support assembly (24) in the steering direction (300) results in a reduction of an internal volume of the one of the first and second variable volume hydraulic chambers (38A, 38B) and a corresponding increase of an internal volume of the other of the first and second variable volume hydraulic chambers (38A, 38B);
**characterised in that** the hydro-mechanical guiding assembly (26) further comprises a set of one or more elastomeric bodies (36), which form deformable walls of the first variable volume hydraulic chamber (38A) and second variable volume hydraulic chamber (38B) and constitute load-dependent pressurising means (42) such that an increase in a vertical load applied by the support assembly (24) on the axle box assembly (30) in the standard operational position of the wheel axle guiding assembly (31) results in a pressure increase in the first variable volume hydraulic chamber (38A) and second variable volume hydraulic chamber (38B).

2. The wheel axle guiding assembly (31) of claim 1, wherein the hydro-mechanical guiding assembly (26) comprises:
- a casing (32) having a bottom (32.1) and a set of one or more side walls (32.2) defining an open cavity, and a top wall (32.3) surrounding a top opening of the open cavity; and
- a plunger (34), the plunger (34) having an internal portion (34.1) received in the cavity and an external portion (34.2) protruding out from the open cavity;
wherein the set of one or more elastomeric bodies (36) comprises a partition membrane (36.2) between the side wall (32.2) of the casing and the internal portion (34.1) of the plunger (34) for partitioning the cavity into the first and second variable volume hydraulic chambers (38A, 38B).

3. The wheel axle guiding assembly (31) of claim 2, wherein the set of one or more elastomeric bodies (36) defines:
- a bottom pad (36.1) between the internal portion (34.1) of the plunger (34) and the bottom (32.1) of the casing (32), a bottom end of each of the first and second variable volume hydraulic chambers (38A, 38B) being closed by the bottom pad (36.1); and
- an annular top membrane (36.3) between the casing (32) the top wall (32.3) of the casing (32) and the plunger, a top end of each of the first and second variable volume hydraulic chambers (38A, 38B) being closed by the top membrane (36.3).

4. The wheel axle guiding assembly of any one of claims 2 to 3, wherein the set of one or more elastomeric bodies (36) is such that:
- the plunger (34) is movable with respect to the casing (32) in a suspension direction (200) of the casing (32), such that an axial distance measured parallel to the suspension direction (200) between the plunger (34) and the top wall (32.3) of the casing (32) is reduced when an axial distance measured parallel to the suspension direction (200) between the plunger (34) and the bottom (32.1) of the casing (32) is reduced, wherein the suspension direction (200) is vertical when the wheel axle guiding assembly (31) is in the standard operational position; and
- the plunger (34) is movable with respect to the casing in the steering direction (300).

5. The wheel axle guiding assembly (31) of any one of claims 2 to 4, wherein the partition wall (34.2) extends in a reference plane perpendicular to the steering direction (300).

6. The wheel axle guiding assembly (31) of any one of claims 2 to 5, wherein a total steering stroke of the plunger (34) with respect to the casing (32) parallel to the steering direction (300) is greater than a total suspension stroke of the plunger (34) with respect to the casing (32) parallel to the suspension direction (200).

7. The wheel axle guiding assembly (31) of any one of claims 2 to 6, wherein the set of one or more elastomeric bodies (36) provides, in the absence of a hydraulic fluid in the first and second variable volume hydraulic chambers (38A, 38B), a steering stiffness in a direction parallel to the steering direction (300) and a suspension stiffness in a direction parallel to the suspension direction (200), and the steering stiffness is less than the suspension stiffness, preferably at least ten times less than the suspension stiffness.

8. A wheel axle guiding assembly (31) for a running gear (10) of a rail vehicle, comprising:
- an axle box assembly (30) defining a revolution axis (100), which is horizontal when the wheel axle guiding assembly (31) is in a standard operational position, and a steering direction (300), which is perpendicular to the revolution axis (100) and horizontal when the wheel axle guiding assembly (31) is in the standard operational position;
- a support assembly (24); and
- a hydro-mechanical guiding assembly (26) fixed to the axle box assembly (30) and to the support assembly (24) to allow a fore-and-aft movement of the axle box assembly (30) relative to the support assembly (24) parallel to the steering direction (300), wherein the hydro-mechanical guiding assembly (26) comprises: a first variable volume hydraulic chamber (38A) and a second variable volume hydraulic chamber (38B) between the support assembly (24) and the axle box assembly (30) such that a movement of the axle box assembly (30) relative to the support assembly (24) in the steering direction (300) results in a reduction of an internal volume of the one of the first and second variable volume hydraulic chambers (38A, 38B) and a corresponding increase of an internal volume of the other of the first and second variable volume hydraulic chambers (38A, 38B);
**characterised in that** the hydro-mechanical guiding assembly (26) further comprises load-dependent pressurising means (42) comprising a variable volume pressurising chamber (62) hydraulically connected to the first variable volume hydraulic chamber (38A) and to the second variable volume hydraulic chamber (38B) and such that an increase in a vertical load applied by the support assembly (24) on the axle box assembly (30) in the standard operational position of the wheel axle guiding assembly (31) results in a pressure increase in the first variable volume hydraulic chamber (38A) and second variable volume hydraulic chamber (38B).

9. The wheel axle guiding assembly (31) of claim 8, further comprising one or more of the following features:
- the variable volume pressurising chamber (62) has a wall (60) fixed relative to the axle box assembly (30) and a wall (58) fixed relative to the support assembly (24);
- a primary spring is provided for connecting the axle box assembly (30) to the support assembly (24), wherein the variable volume pressurising chamber (62) is mechanically in series with the primary spring between the axle box assembly (30) and the support assembly (24);
- a primary spring is provided for connecting the axle box assembly (30) to the support assembly (24), wherein the variable volume pressurising chamber (62) is mechanically in parallel with the primary spring between the axle box assembly (30) and the support assembly (24);
- the support assembly (24) comprises a remote variable volume pressurising chamber (62).
- the support assembly (24) is part of a running gear, which comprises a running gear frame and a secondary suspension for connecting the running gear frame to a vehicle body of the rail vehicle, and the variable volume pressurising chamber (62) is mechanically in series with the secondary spring;
- the support assembly (24) comprises a running gear frame, the wheel axle guiding assembly (31) comprises a secondary suspension for connecting the running gear frame to a vehicle body of the rail vehicle, and the variable volume pressurising chamber (62) is mechanically in parallel with the secondary spring.

10. The wheel axle guiding assembly (31) of any one of the preceding claims, wherein the load-dependent pressurising means (42) are such that an increase in the vertical load applied by the support assembly (24) on the axle box assembly (30) from no load to a standard operational load results in a pressure increase of more than 3 bars, preferably more than 5 bars in the first variable volume hydraulic chamber (38A) and second variable volume hydraulic chamber (38B).

11. The wheel axle guiding assembly (31) of any one of the preceding claims, further comprising a communication passage (40) with a constriction between the first and second variable volume hydraulic chambers (38A, 38B).

12. The wheel axle guiding assembly (31) of any one of the preceding claims, further comprising a passive steering circuit, wherein the first and second variable volume hydraulic chambers are connected to the passive steering circuit.

13. The wheel axle guiding assembly (31) of any one of the preceding claims, wherein the axle box assembly (30) comprises a swing arm (20), and the hydro-mechanical guiding assembly (26) comprises a bushing element between the swing arm (20) and the support assembly (24), wherein the bushing element comprises the first and second variable volume hydraulic chambers (38A, 38B).

14. The wheel axle guiding assembly (31) of any one of the preceding claims, wherein the hydro-mechanical guiding assembly (30) comprises a first longitudinal hydro-mechanical converter (26A) fixed to a first interface of the axle box assembly (30) and a first interface of the support assembly (24) and a second longitudinal hydro-mechanical converter (26B) fixed to a second interface of the axle box assembly (30) and a second interface of the support assembly (24).

15. The wheel axle guiding assembly (31) of any one of the preceding claims, further comprising a failsafe locking device (44) for locking the axle box assembly (30) relative to the support assembly (24) in case of loss of pressure consecutive to a hydraulic leakage.

## Patentansprüche

1. Radachsenführungsanordnung (31) für ein Laufwerk (10) eines Schienenfahrzeugs, umfassend:
- eine Achslageranordnung (30), die eine Drehachse (100) definiert, die horizontal ist, wenn sich die Radachsenführungsanordnung (31) in einer Standardbetriebsposition befindet, und eine Lenkrichtung (300), die senkrecht zu der Drehachse (100) und horizontal ist, wenn sich die Radachsenführungsanordnung (31) in der Standardbetriebsposition befindet;
- eine Stützanordnung (24); und
- eine hydromechanische Führungsanordnung (26), die an der Achslageranordnung (30) und an der Stützanordnung (24) fixiert ist, um eine Vor- und Rückwärtsbewegung der Achslageranordnung (30) relativ zu der Stützanordnung (24) parallel zu der Lenkrichtung (300) zu ermöglichen, wobei die hydromechanische Führungsanordnung (26) eine erste Hydraulikkammer (38A) mit variablem Volumen und eine zweite Hydraulikkammer (38B) mit variablem Volumen zwischen der Stützanordnung (24) und der Achslageranordnung (30) derart umfasst, dass eine Bewegung der Achslageranordnung (30) relativ zu der Stützanordnung (24) in der Lenkrichtung (300) zu einer Reduzierung eines Innenvolumens der einen der ersten und der zweiten Hydraulikkammer (38A, 38B) mit variablem Volumen und einer entsprechenden Erhöhung eines Innenvolumens der anderen der ersten und der zweiten Hydraulikkammer (38A, 38B) mit variablem Volumen führt;
**dadurch gekennzeichnet, dass** die hydromechanische Führungsanordnung (26) ferner einen Satz von einem oder mehreren Elastomerkörpern (36) umfasst, die verformbare Wände der ersten Hydraulikkammer (38A) mit variablem Volumen und der zweiten Hydraulikkammer (38B) mit variablem Volumen ausbilden und lastabhängige Druckmittel (42) derart ausbilden, dass eine Erhöhung einer vertikalen Last, die durch die Stützanordnung (24) auf der Achslageranordnung (30) in der Standardbetriebsposition der Radachsenführungsanordnung (31) ausgeübt wird, zu einer Druckerhöhung in der ersten Hydraulikkammer (38A) mit variablem Volumen und der zweiten Hydraulikkammer (38B) mit variablem Volumen führt.

2. Radachsenführungsanordnung (31) nach Anspruch 1, wobei die hydromechanische Führungsanordnung (26) folgendes umfasst:
- ein Gehäuse (32), das einen Boden (32.1) und einen Satz einer oder mehrerer Seitenwände (32.2) aufweist, die einen offenen Hohlraum definieren, und eine obere Wand (32.3), die eine obere Öffnung des offenen Hohlraums umgibt; und
- einen Kolben (34), wobei der Kolben (34) einen Innenabschnitt (34.1), der in dem Hohlraum aufgenommen ist, und einen Außenabschnitt (34.2) aufweist, der aus dem offenen Hohlraum heraussteht;
wobei der Satz von einem oder mehreren Elastomerkörpern (36) eine Trennmembran (36.2) zwischen der Seitenwand (32.2) des Gehäuses und dem Innenabschnitt (34.1) des Kolbens (34) zum Trennen des Hohlraums in die erste und die zweite Hydraulikkammer (38A, 38B) mit variablem Volumen umfasst.

3. Radachsenführungsanordnung (31) nach Anspruch 2, wobei der Satz von einem oder mehreren Elastomerkörpern (36) folgendes definiert:
- einen unteren Belag (36.1) zwischen dem Innenabschnitt (34.1) des Kolbens (34) und dem Boden (32.1) des Gehäuses (32), wobei ein unteres Ende jedes der ersten und der zweiten Hydraulikkammer (38A, 38B) mit variablem Volumen durch den unteren Belag (36.1) geschlossen ist; und
- eine ringförmige obere Membran (36.3) zwischen dem Gehäuse (32) der oberen Wand (32.3) des Gehäuses (32) und dem Kolben, wobei ein oberes Ende jedes der ersten und der zweiten Hydraulikkammer (38A, 38B) mit variablem Volumen durch die obere Membran (36.3) geschlossen ist.

4. Radachsenführungsanordnung nach einem der Ansprüche 2 bis 3, wobei der Satz von einem oder mehreren Elastomerkörpern (36) derart ist, dass:
- der Kolben (34) hinsichtlich des Gehäuses (32) in einer Aufhängungsrichtung (200) des Gehäuses (32) derart bewegbar ist, dass ein axialer Abstand, der parallel zu der Aufhängungsrichtung (200) zwischen dem Kolben (34) und der oberen Wand (32.3) des Gehäuses (32) gemessen wird, reduziert wird, wenn ein axialer Abstand, der parallel zu der Aufhängungsrichtung (200) zwischen dem Kolben (34) und dem Boden (32.1) des Gehäuses (32) gemessen wird, reduziert wird, wobei die Aufhängungsrichtung (200) vertikal ist, wenn die Radachsenführungsanordnung (31) in der Standardbetriebsposition ist; und
- der Kolben (34) hinsichtlich des Gehäuses in der Lenkrichtung (300) bewegbar ist.

5. Radachsenführungsanordnung (31) nach einem der Ansprüche 2 bis 4, wobei sich die Trennwand (34.2) in einer Referenzebene senkrecht zu der Lenkrichtung (300) erstreckt.

6. Radachsenführungsanordnung (31) nach einem der Ansprüche 2 bis 5, wobei ein Gesamtlenkhub des Kolbens (34) hinsichtlich des Gehäuses (32) parallel zu der Lenkrichtung (300) über einem Gesamtaufhängungshub des Kolbens (34) hinsichtlich des Gehäuses (32) parallel zu der Aufhängungsrichtung (200) liegt.

7. Radachsenführungsanordnung (31) nach einem der Ansprüche 2 bis 6, wobei der Satz von einem oder mehreren Elastomerkörpern (36) in Abwesenheit eines Hydraulikfluids in der ersten und der zweiten Hydraulikkammer (38A, 38B) mit variablem Volumen eine Lenksteifigkeit in einer Richtung parallel zu der Lenkrichtung (300) und einer Aufhängungssteifigkeit in einer Richtung parallel zu der Aufhängungsrichtung (200) bereitstellt, und die Lenksteifigkeit kleiner als die Aufhängungssteifigkeit, vorzugsweise mindestens zehnmal kleiner als die Aufhängungssteifigkeit ist.

8. Radachsenführungsanordnung (31) für ein Laufwerk (10) eines Schienenfahrzeugs, umfassend:
- eine Achslageranordnung (30), die eine Drehachse (100) definiert, die horizontal ist, wenn sich die Radachsenführungsanordnung (31) in einer Standardbetriebsposition befindet, und eine Lenkrichtung (300), die senkrecht zu der Drehachse (100) und horizontal ist, wenn sich die Radachsenführungsanordnung (31) in der Standardbetriebsposition befindet;
- eine Stützanordnung (24); und
- eine hydromechanische Führungsanordnung (26), die an der Achslageranordnung (30) und an der Stützanordnung (24) fixiert ist, um eine Vor- und Rückwärtsbewegung der Achslageranordnung (30) relativ zu der Stützanordnung (24) parallel zu der Lenkrichtung (300) zu ermöglichen, wobei die hydromechanische Führungsanordnung (26) umfasst: eine erste Hydraulikkammer (38A) mit variablem Volumen und eine zweite Hydraulikkammer (38B) mit variablem Volumen zwischen der Stützanordnung (24) und der Achslageranordnung (30) derart, dass eine Bewegung der Achslageranordnung (30) relativ zu der Stützanordnung (24) in der Lenkrichtung (300) zu einer Reduzierung eines Innenvolumens der einen der ersten und der zweiten Hydraulikkammer (38A, 38B) mit variablem Volumen und einer entsprechenden Erhöhung eines Innenvolumens der anderen der ersten und der zweiten Hydraulikkammer (38A, 38B) mit variablem Volumen führt;
**dadurch gekennzeichnet, dass** die hydromechanische Führungsanordnung (26) ferner lastabhängige Druckmittel (42) umfasst, umfassend eine Druckkammer (62) mit variablem Volumen, die mit der ersten Hydraulikkammer (38A) mit variablem Volumen und mit der zweiten Hydraulikkammer (38B) mit variablem Volumen hydraulisch verbunden ist, und **derart, dass** eine Erhöhung einer vertikalen Last, die durch die Stützanordnung (24) auf der Achslageranordnung (30) in der Standardbetriebsposition der Radachsenführungsanordnung (31) ausgeübt wird, zu eine Druckerhöhung in der Hydraulikkammer (38A) mit variablem Volumen und der zweiten Hydraulikkammer (38B) mit variablem Volumen führt.

9. Radachsenführungsanordnung (31) nach Anspruch 8, ferner umfassend eines oder mehrere der folgenden Merkmale:
- die Druckkammer (62) mit variablem Volumen eine Wand (60), die relativ zu der Achslageranordnung (30) fixiert ist, und eine Wand (58) aufweist, die relativ zu der Stützanordnung (24) fixiert ist;
- eine Primärfeder zum Verbinden der Achslageranordnung (30) mit der Stützanordnung (24) bereitgestellt ist, wobei die Druckkammer (62) mit variablem Volumen mit der Primärfeder zwischen der Achslageranordnung (30) und der Stützanordnung (24) mechanisch in Reihe ist;
- eine Primärfeder zum Verbinden der Achslageranordnung (30) mit der Stützanordnung (24) bereitgestellt ist, wobei der Druckkammer (62) mit variablem Volumen zu der Primärfeder zwischen der Achslageranordnung (30) und der Stützanordnung (24) mechanisch parallel ist;
- die Stützanordnung (24) einen entfernten Druckraum (62) mit variablem Volumen umfasst.
- die Stützanordnung (24) Teil eines Laufwerks ist, das einen Laufwerkrahmen und eine Sekundäraufhängung zum Verbinden des Laufwerkrahmens mit einem Fahrzeugkasten des Schienenfahrzeugs umfasst, und die Druckkammer (62) mit variablem Volumen mit der Sekundärfeder mechanisch in Reihe ist;
- die Stützanordnung (24) einen Laufwerkrahmen umfasst, wobei die Radachsenführungsanordnung (31) eine Sekundäraufhängung zum Verbinden des Laufwerkrahmens mit einem Fahrzeugkasten des Schienenfahrzeugs umfasst, und die Druckkammer (62) mit variablem Volumen parallel zu der Sekundärfeder ist.

10. Radachsenführungsanordnung (31) nach einem der vorstehenden Ansprüche, wobei das lastabhängige Druckmittel (42) derart sind, dass eine Erhöhung der vertikalen Last, die durch die Stützanordnung (24) auf der Achslageranordnung (30) von keiner Last in eine Standardbetriebslast ausgeübt wird, zu einer Druckerhöhung von mehr als 3 bar, vorzugsweise mehr als 5 bar in der ersten Hydraulikkammer (38A) mit variablem Volumen und der zweiten Hydraulikkammer (38B) mit variablem Volumen führt.

11. Radachsenführungsanordnung (31) nach einem der vorstehenden Ansprüche, ferner umfassend einen Kommunikationsdurchgang (40) mit einer Verengung zwischen der ersten und der zweiten Hydraulikkammer (38A, 38B) mit variablem Volumen.

12. Radachsenführungsanordnung (31) nach einem der vorstehenden Ansprüche, ferner umfassend eine passive Lenkschaltung, wobei die erste und die zweite Hydraulikkammer mit variablem Volumen mit der passiven Lenkschaltung verbunden sind.

13. Radachsenführungsanordnung (31) nach einem der vorstehenden Ansprüche, wobei die Achslageranordnung (30) einen Schwenkarm (20) umfasst und die hydromechanische Führungsanordnung (26) ein Buchsenelement zwischen dem Schwenkarm (20) und der Stützanordnung (24) umfasst, wobei das Buchsenelement die erste und die zweite Hydraulikkammer (38A, 38B) mit variablem Volumen umfasst.

14. Radachsenführungsanordnung (31) nach einem der vorstehenden Ansprüche, wobei die hydromechanische Führungsanordnung (30) einen ersten länglichen hydromechanischen Wandler (26A), der an einer ersten Schnittstelle der Achslageranordnung (30) fixiert ist, und eine erste Schnittstelle der Stützanordnung (24) und einen zweiten länglichen hydromechanischen Wandler (26B) umfasst, der an einer zweiten Schnittstelle der Achslageranordnung (30) und einer zweiten Schnittstelle der Stützanordnung (24) fixiert ist.

15. Radachsenführungsanordnung (31) nach einem der vorstehenden Ansprüche, ferner umfassend eine ausfallsichere Verriegelungsvorrichtung (44) zum Verriegeln der Achslageranordnung (30) relativ zu der Stützanordnung (24) im Falle eines Druckverlusts, der auf eine hydraulische Leckage folgt.

## Revendications

1. Ensemble de guidage d'essieu de roue (31) pour un train de roulement (10) d'un véhicule ferroviaire, comprenant :
- un ensemble de boîte d'essieu (30) définissant un axe de révolution (100), qui est horizontal lorsque l'ensemble de guidage d'essieu de roue (31) est dans une position opérationnelle standard, et une direction d'orientation (300), qui est perpendiculaire à l'axe de révolution (100) et horizontale, lorsque l'ensemble de guidage d'essieu de roue (31) est dans la position opérationnelle standard ;
- un ensemble de support (24) ; et
- un ensemble de guidage hydro-mécanique (26) fixé à l'ensemble de boîte d'essieu (30) et à l'ensemble de support (24) pour permettre un mouvement avant et arrière de l'ensemble de boîte d'essieu (30) par rapport à l'ensemble de support (24) parallèle à la direction d'orientation (300), l'ensemble de guidage hydro-mécanique (26) comprenant : une première chambre hydraulique à volume variable (38A) et une seconde chambre hydraulique à volume variable (38B), entre l'ensemble de support (24) et l'ensemble de boîte d'essieu (30), de telle sorte qu'un mouvement de l'ensemble de boîte d'essieu (30) par rapport à l'ensemble de support (24) dans la direction d'orientation (300) entraîne une réduction d'un volume interne de l'une des première et seconde chambres hydrauliques à volume variable (38A, 38B) et une augmentation correspondante d'un volume interne de l'autre des première et seconde chambres hydrauliques à volume variable (38A, 38B) ;
**caractérisé en ce que** l'ensemble de guidage hydro-mécanique (26) comprend en outre un ensemble d'un ou plusieurs corps élastomères (36), qui forment des parois déformables de la première chambre hydraulique à volume variable (38A) et de la seconde chambre hydraulique à volume variable (38B) et constituent un moyen de pressurisation dépendant de la charge (42) de telle sorte qu'une augmentation d'une charge verticale appliquée par l'ensemble de support (24) sur l'ensemble de boîte d'essieu (30) dans la position opérationnelle standard de l'ensemble de guidage d'essieu de roue (31) entraîne une augmentation de pression dans la première chambre hydraulique à volume variable (38A) et la seconde chambre hydraulique à volume variable (38B).

2. Ensemble de guidage d'essieu de roue (31) selon la revendication 1, dans lequel l'ensemble de guidage hydro-mécanique (26) comprend :
- un boîtier (32) ayant un fond (32.1) et un ensemble d'une ou plusieurs parois latérales (32.2) définissant une cavité ouverte, et une paroi supérieure (32.3) entourant une ouverture supérieure de la cavité ouverte ; et
- un piston (34), le piston (34) ayant une partie interne (34.1) reçue dans la cavité et une partie externe (34.2) faisant saillie à partir de la cavité ouverte ;
l'ensemble d'un ou plusieurs corps élastomères (36) comprenant une membrane de séparation (36,2) entre la paroi latérale (32.2) du boîtier et la partie interne (34.1) du piston (34) pour diviser la cavité en les première et seconde chambres hydrauliques à volume variable (38A, 38B).

3. Ensemble de guidage d'essieu de roue (31) selon la revendication 2, dans lequel l'ensemble d'un ou plusieurs corps élastomères (36) définit :
- un patin inférieur (36.1) entre la partie interne (34.1) du piston (34) et le fond (32.1) du boîtier (32), une extrémité inférieure de chacune des première et seconde chambres hydrauliques à volume variable (38A, 38B) étant fermée par le patin inférieur (36.1) ; et
- une membrane supérieure annulaire (36,3) entre le boîtier (32), la paroi supérieure (32.3) du boîtier (32) et le piston, une extrémité supérieure de chacune des première et seconde chambres hydrauliques à volume variable (38A, 38B) étant fermée par la membrane supérieure (36,3).

4. Ensemble de guidage d'essieu de roue selon l'une quelconque des revendications 2 à 3, dans lequel l'ensemble d'un ou plusieurs corps élastomères (36) est tel que :
- le piston (34) est mobile par rapport au boîtier (32) dans une direction de suspension (200) du boîtier (32), de telle sorte qu'une distance axiale mesurée parallèlement à la direction de suspension (200) entre le piston (34) et la paroi supérieure (32.3) du boîtier (32) est réduite, lorsqu'une distance axiale mesurée parallèlement à la direction de suspension (200) entre le piston (34) et le fond (32.1) du boîtier (32) est réduite, la direction de suspension (200) étant verticale, lorsque l'ensemble de guidage d'essieu de roue (31) est dans la position opérationnelle standard ; et
- le piston (34) est mobile par rapport au boîtier dans la direction d'orientation (300).

5. Ensemble de guidage d'essieu de roue (31) selon l'une quelconque des revendications 2 à 4, dans lequel la paroi de séparation (34.2) s'étend dans un plan de référence perpendiculaire à la direction d'orientation (300).

6. Ensemble de guidage d'essieu de roue (31) selon l'une quelconque des revendications 2 à 5, dans lequel une course d'orientation totale du piston (34) par rapport au boîtier (32) parallèle à la direction d'orientation (300) est supérieure à une course totale de suspension du piston (34) par rapport au boîtier (32) parallèle à la direction de suspension (200).

7. Ensemble de guidage d'essieu de roue (31) selon l'une quelconque des revendications 2 à 6, dans lequel l'ensemble d'un ou plusieurs corps élastomères (36) fournit, en l'absence d'un fluide hydraulique dans les première et seconde chambres hydrauliques à volume variable (38A, 38B), une rigidité d'orientation dans une direction parallèle à la direction d'orientation (300) et une rigidité de suspension dans une direction parallèle à la direction de suspension (200), et la rigidité d'orientation est inférieure à la rigidité de suspension, de préférence au moins dix fois inférieure à la rigidité de suspension.

8. Ensemble de guidage d'essieu de roue (31) pour un train de roulement (10) d'un véhicule ferroviaire, comprenant :
- un ensemble de boîte d'essieu (30) définissant un axe de révolution (100), qui est horizontal lorsque l'ensemble de guidage d'essieu de roue (31) est dans une position opérationnelle standard, et une direction d'orientation (300), qui est perpendiculaire à l'axe de révolution (100) et horizontale, lorsque l'ensemble de guidage d'essieu de roue (31) est dans la position opérationnelle standard ;
- un ensemble de support (24) ; et
- un ensemble de guidage hydro-mécanique (26) fixé à l'ensemble de boîte d'essieu (30) et à l'ensemble de support (24) pour permettre un mouvement avant et arrière de l'ensemble de boîte d'essieu (30) par rapport à l'ensemble de support (24) parallèle à la direction d'orientation (300), l'ensemble de guidage hydro-mécanique (26) comprenant : une première chambre hydraulique à volume variable (38A) et une seconde chambre hydraulique à volume variable (38B), entre l'ensemble de support (24) et l'ensemble de boîte d'essieu (30), de telle sorte qu'un mouvement de l'ensemble de boîte d'essieu (30) par rapport à l'ensemble de support (24) dans la direction d'orientation (300) entraîne une réduction d'un volume interne de l'une des première et seconde chambres hydrauliques à volume variable (38A, 38B) et une augmentation correspondante d'un volume interne de l'autre des première et seconde chambres hydrauliques à volume variable (38A, 38B) ;
**caractérisé en ce que** l'ensemble de guidage hydro-mécanique (26) comprend en outre un moyen de pressurisation dépendant de la charge (42) comprenant une chambre de pressurisation à volume variable (62) raccordée hydrauliquement à la première chambre hydraulique à volume variable (38A) et à la seconde chambre hydraulique à volume variable (38B) et tel qu'une augmentation d'une charge verticale appliquée par l'ensemble de support (24) sur l'ensemble de boîte d'essieu (30) dans la position opérationnelle standard de l'ensemble de guidage d'essieu de roue (31) entraîne une augmentation de pression dans la première chambre hydraulique à volume variable (38A) et la seconde chambre hydraulique à volume variable (38B).

9. Ensemble de guidage d'essieu de roue (31) selon la revendication 8, comprenant en outre une ou plusieurs des caractéristiques suivantes :
- la chambre de pressurisation à volume variable (62) a une paroi (60) fixée par rapport à l'ensemble de boîte d'essieu (30) et une paroi (58) fixée par rapport à l'ensemble de support (24) ;
- un ressort primaire est prévu pour raccorder l'ensemble de boîte d'essieu (30) à l'ensemble de support (24), la chambre de pressurisation (62) à volume variable étant mécaniquement en série avec le ressort primaire entre l'ensemble de boîte d'essieu (30) et l'ensemble de support (24) ;
- un ressort primaire est prévu pour raccorder l'ensemble de boîte d'essieu (30) à l'ensemble de support (24), la chambre de pressurisation (62) à volume variable étant mécaniquement en parallèle avec le ressort primaire entre l'ensemble de boîte d'essieu (30) et l'ensemble de support (24) ;
- l'ensemble de support (24) comprend une chambre de pressurisation (62) à volume variable distant.
- l'ensemble de support (24) fait partie d'un train de roulement, qui comprend un châssis de train de roulement et une suspension secondaire pour raccorder le châssis de train de roulement à une carrosserie de véhicule du véhicule ferroviaire, et la chambre de pressurisation à volume variable (62) est mécaniquement en série avec le ressort secondaire ;
- l'ensemble de support (24) comprend un châssis de train de roulement, l'ensemble de guidage d'essieu de roue (31) comprend une suspension secondaire pour raccorder le châssis de train de roulement à une carrosserie de véhicule du véhicule ferroviaire, et la chambre de pressurisation à volume variable (62) est mécaniquement en parallèle avec le ressort secondaire.

10. Ensemble de guidage d'essieu de roue (31) selon l'une quelconque des revendications précédentes, dans lequel le moyen de pressurisation dépendant de la charge (42) est tel qu'une augmentation de la charge verticale appliquée par l'ensemble de support (24) sur l'ensemble de boîte d'essieu (30) sans charge à une charge opérationnelle standard entraîne une augmentation de pression supérieure à 3 bars, de préférence supérieure à 5 bars dans la première chambre hydraulique à volume variable (38A) et la seconde chambre hydraulique à volume variable (38B).

11. Ensemble de guidage d'essieu de roue (31) selon l'une quelconque des revendications précédentes, comprenant en outre un passage de communication (40) avec un étranglement entre les première et seconde chambres hydrauliques à volume variable (38A, 38B).

12. Ensemble de guidage d'essieu de roue (31) selon l'une quelconque des revendications précédentes, comprenant en outre un circuit d'orientation passif, les première et seconde chambres hydrauliques à volume variable étant raccordées au circuit d'orientation passif.

13. Ensemble de guidage d'essieu de roue (31) selon l'une quelconque des revendications précédentes, dans lequel l'ensemble de boîte d'essieu (30) comprend un bras oscillant (20), et l'ensemble de guidage hydro-mécanique (26) comprend un élément de douille entre le bras oscillant (20) et l'ensemble de support (24), l'élément de douille comprenant les première et seconde chambres hydrauliques à volume variable (38A, 38B).

14. Ensemble de guidage d'essieu de roue (31) selon l'une quelconque des revendications précédentes, dans lequel l'ensemble de guidage hydro-mécanique (30) comprend un premier convertisseur hydro-mécanique longitudinal (26A) fixé à une première interface de l'ensemble de boîte d'essieu (30) et une première interface de l'ensemble de support (24) et un second convertisseur hydro-mécanique longitudinal (26B) fixé à une seconde interface de l'ensemble de boîte d'essieu (30) et une seconde interface de l'ensemble de support (24).

15. Ensemble de guidage d'essieu de roue (31) selon l'une quelconque des revendications précédentes, comprenant en outre un dispositif de verrouillage à sécurité intégrée (44) pour verrouiller l'ensemble de boîte d'essieu (30) par rapport à l'ensemble de support (24) en cas de perte de pression consécutive à une fuite hydraulique.
